# EUROPEAN PATENT APPLICATION

(11) **EP 4 734 533 A1**
(43) Date of publication of application: **29.04.2026**
(21) Application number: 25210611.7
(22) Date of filing: 23.10.2025
(51) Int. Cl.: H04N 21/41, H04N 21/436, H04N 21/439, H04N 21/485

(54) **DISPLAY DEVICE AND SYSTEM INCLUDING THE SAME**

(30) Priority: 24.10.2024 KR 20240146739
(71) Applicant: LG Electronics Inc., Yeongdeungpo-gu Seoul 07336 (KR)
(72) Inventor: LEE, Hansu, Seoul (KR); JEONG, Hyojeong, Seoul (KR); KIM, Hyorim, Seoul (KR); KIM, Sanghun, Seoul (KR)
(74) Representative: Schott, Jakob Valentin

(57) **Abstract**

A display device including a display; an internal speaker; a wireless communication interface communicating with at least one external speaker; and a controller configured to receive a first audio signal to be output through the internal speaker and the at least one external speaker, display a graphic user interface including a surround sound mode option and a non-surround sound mode option, transmit a command to the at least one external speaker requesting an audio output capabilities of the at least one external speaker, activate the surround sound mode option when the audio capabilities indicates the at least one external speaker supports surround sound, and deactivate the surround sound mode when the audio capabilities indicates the at least one external speaker does not support surround sound.

## Description

### CROSS-REFERENCE TO RELATED APPLICATIONS

This application claims priority to Korean Patent Application No. 10-2024-0146739, filed in the Republic of Korea on October 24, 2024, the entire contents of which are hereby expressly incorporated by reference into the present application.

### BACKGROUND

### Field of the Invention

The present disclosure relates to a display device and an operating method thereof, and more particularly, to a display device and a system including the same which communicate with an external speaker by using Bluetooth.

### Discussion of the Related Art

Digital TV services using wired or wireless communication networks become more common. The digital TV services provide various services which cannot be provided in an existing analog broadcasting service. For example, Internet protocol television (IPTV) and smart TV services which are the types of digital TV service provide a bidirectionality which allows a user to actively select the type of viewing program, a viewing time, etc. The IPTV and smart TV services can also provide various additional services, for example, Internet search, home shopping, an online game, etc., based on the bidirectionality.

The display device is also possible to mutually transmit and receive data to and from various electronic devices wiredly/wirelessly. For example, the display device can perform communication connection with an external speaker through a Bluetooth scheme which is one of the short-range communication schemes. When the display device transmits an audio signal to the external speaker, the same audio can be output through the display device and the external speaker, and different audio can also be output in order to provide a surround sound to a user.

Meanwhile, the display device and the external speaker have different configurations, specifications, settings, etc., related to the audio output, so there is a problem in that it is difficult to provide the audio output from the display device and the external speaker to the user as one unified audio. Further, when sound effects set in the display device and the external speaker, respectively are different, audio to which different sound effects are applied are output to the display device and the external speaker, so it is impossible to provide one unified audio. Further, even though an audio signal to which a predetermined sound effect is transmitted to the external speaker by the display device, when the external speaker duplicably applies the predetermined sound effect to the audio signal, an audio to which a sound effect different from the predetermined sound effect can be correspondingly output from the external speaker, so it is problematic to provide one unified audio.

### SUMMARY

In view of the above, the present disclosure solves the above-described problems and other problems.

One object is to provide a display device and a system including the same which process an audio signal by setting an audio mode corresponding to an external speaker to provide an audio signal optimized to the external speaker to the external speaker.

Another object is to provide a display device and a system including the same which can recommend the audio mode corresponding to the external speaker.

Yet another object is to provide a display device and a system including the same which control setting for an audio output of the external speaker according to the audio mode to provide one unified audio.

Still yet another object is to provide a display device and a system including the same which control the audio signal according to the setting for the audio output of the external speaker to provide one unified audio.

Another object is to provide a display device and a system including the same which can provide a state of the external speaker to a user, and perform a control according to the state of the external speaker.

In order to achieve the object of the present disclosure, a display device according to an embodiment of the present disclosure includes a display; a speaker; a wireless communication interface communicating with at least one external speaker; and a controller, and the controller can transmit a command for an output of an audio to the external speaker based on a setting of an audio mode of outputting audio through the speaker and the external speaker, transmit a first audio signal to the external speaker based on the command transmitted to the external speaker being a first command, and transmit a second audio signal generated by processing the first audio signal to the external speaker based on the command transmitted to the external speaker being a second command.

In order to achieve the object of the present disclosure, a system according to an embodiment of the present disclosure can include: a display device; and an external speaker, and the display device can transmit a command for an output of an audio to the external speaker based on a setting of an audio mode of outputting audio through a speaker of the display device, and the external speaker, transmit a first audio signal to the external speaker based on the command transmitted to the external speaker being a first command, and transmit a second audio signal generated by processing the first audio signal to the external speaker based on the command transmitted to the external speaker being a second command, and the external speaker can output an audio corresponding to a third audio signal generated by processing the first audio signal based on reception of the first command, and output an audio corresponding to the second audio signal based on reception of the second command.

Effects of the display device and the system including the same according to the present disclosure are described as follows.

According to at least one embodiment of the present disclosure, an audio signal is processed by setting an audio mode corresponding to an external speaker to provide an audio signal optimized to the external speaker.

According to at least one embodiment of the present disclosure, the audio mode corresponding to the external speaker can be recommended.

According to at least one embodiment of the present disclosure, by controlling setting for an audio output of the external speaker according to the audio mode, one unified audio can be provided.

According to at least one embodiment of the present disclosure, by processing the audio signal according to the setting for the audio output of the external speaker, one unified audio can be provided.

According to at least one embodiment of the present disclosure, a state of the external speaker can be provided to a user, and a control according to the state of the external speaker can be performed.

An additional range of an applicability of the present disclosure will be apparent from the following detailed description. However, since various changes and modifications can be clearly appreciated by those skilled in the art within the spirit and the scope of the present disclosure, the detailed description and a specific exemplary embodiment such as a preferred exemplary embodiment of the present disclosure should be appreciated as being just given as an example.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
Fig. 1 is a block diagram of a display device according to an embodiment of the present disclosure.
Fig. 2 is a block diagram of a remote control device according to an embodiment of the present disclosure.
Fig. 3 is a diagram of a configuration of the remote control device according to an embodiment of the present disclosure.
Fig. 4 is a diagram illustrating an example of utilizing the remote control device according to an embodiment of the present disclosure.
Fig. 5 is a diagram illustrating an example of a configuration of a system according to an embodiment of the present disclosure.
Figs. 6 to 9C are diagrams referenced for describing a connection between the display device and an external speaker according to embodiments of the present disclosure.
Fig. 10 is a flowchart referenced for describing an operation of the system according to an embodiment of the present disclosure.
Fig. 11 is a diagram referenced for describing various sound effects according to an embodiment of the present disclosure.
Fig. 12 is a flowchart referenced for describing an operation of the system related to application of a sound effect depending on an audio mode according to an embodiment of the present disclosure.
Fig. 13 is a flowchart referenced for describing an operation of the system related to application of a sound effect depending on an audio mode according to another embodiment of the present disclosure.
Figs. 14 to 16 are flowcharts for an operating method of a display device according to an embodiment of the present disclosure.

### DETAILED DESCRIPTION

Hereinafter, the present disclosure will be described in detail with reference to drawings. In the drawings, in order to clearly and briefly describe the present disclosure, illustration of a part which is not related to the description is omitted, and throughout the present disclosure, the same or extremely similar part are denoted by the same reference numeral.

Suffixes "module" and "unit" for components used in the following description are given in consideration of easy preparation of the specification only and do not have their own particularly important meanings or roles. Accordingly, the "module" and "unit" can be used interchangeably.

In the present application, it should be understood that term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance. Further, in the present disclosure, the terms such as first, second, etc., may be used for describing various components, but the components are not limited by the terms. The terms are used for distinguishing one component from another component.

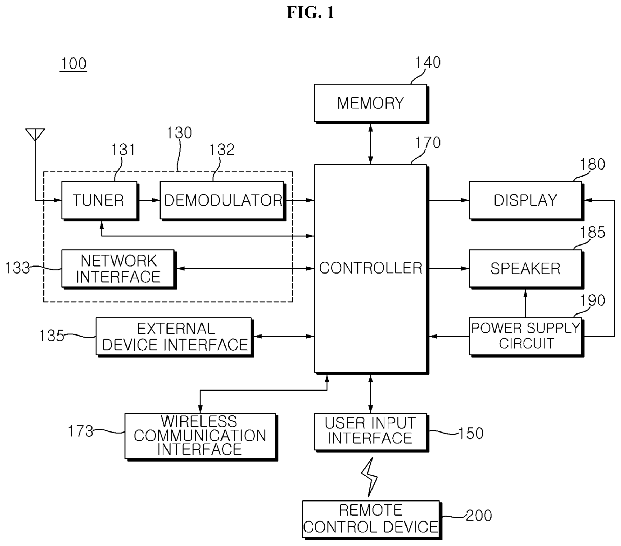

Fig. 1 is a block diagram of a display device according to an embodiment of the present disclosure. Referring to Fig. 1, the display device 100 can include a broadcast receiver 130, an external device interface 135, a memory 140, a user input interface 150, a controller 170, a wireless communication interface 173, a display 180, a speaker 185, and a power supply circuit 190.

The broadcast receiver 130 can include a tuner 131, a demodulator 132, and a network interface 133. The tuner 131 can select a specific broadcasting channel according to a channel selection instruction. The tuner 131 can receive a broadcasting signal for the selected specific broadcasting channel.

The demodulator 132 can separate the received broadcasting signal into a video signal, an audio signal, and a data signal related to a broadcasting program, and reconstruct the separated video signal, audio signal, and data signal to outputtable forms. The external device interface 135 can receive an application or an application list within an adjacent external device, and deliver the received application or application list to the controller 170 or the memory 140.

The external device interface 135 can provide a connection path between the display device 100 and the external device. The external device interface 135 can receive at least one of a video and an audio output from an external device wirelessly or wiredly connected to the display device 100, and deliver the received one to the controller 170. The external device interface 135 can include a plurality of external input terminals. The plurality of external input terminals can include an RGB terminal, one or more high definition multimedia interface (HDMI) terminals, and component terminals.

A video signal of the external device input through the external device interface 135 can be output through the display 180. An audio signal of the external device input through the external device interface 135 can be output through the speaker 185. An external device connectable to the external device interface 135 can be any one of a set-top box a Blu-ray player, a DVD player, a game machine, a sound bar, a smartphone, a PC, a USB memory, and a home theater, and this is just an example.

The network interface 133 can provide an interface for connecting the display device 100 to a wired/wireless network including an Internet network. The network interface 133 can transmit or receive data to or from other users or other electronic devices through a connected network or another network linked to the connected network. Further, the network interface 133 can transmit some content data stored in the display device 100 to a selected user or a selected electronic device among other users or other electronic devices pre-registered in the display device 100.

The network interface 133 can be connected to a predetermined webpage through a connected network or other networks linked to the connected network. That is, the network interface 133 is connected to a predetermined webpage to transmit or receive data to or from a corresponding server. In addition, the network interface 133 can receive contents or data provided by a content provider or a network operator. That is, the network interface 133 can receive contents such as movies, advertisements, games, VODs, and broadcasting signals provided from the content provider or a network provider, and information related thereto through the network.

In addition, the network interface 133 can receive update information and an update file of firmware provided by the network operator, and transmit data to the Internet or content provider, or the network operator. The network interface 133 can select and receive a desired application among applications opened to the air through the network.

The memory 140 can store a program for each signal processing or control in the controller 170, and store a signal-processed video, audio, or data signal. Further, the memory 140 can also perform a function for temporarily storing the video, audio, or data signal input from the external device interface 135 or the network interface 133, and can store information on a predetermined image through a channel memory function. The memory 140 can store the application or application list input from the external device interface 135 or the network interface 133.

The display device 100 can play content files (a moving picture file, a still image file, a music file, a document file, an application file, etc.) stored in the memory 140, and provide the played content files to the user.

The user input interface 150 can deliver a signal input by the user to the controller 170 or deliver a signal from the controller 170 to the user. For example, the user input interface 150 can receive and process a control signal such as power on/off, channel selection, screen setting, etc., from the remote control device 200, or process to transmit a control signal from the controller 170 to the remote control device 200, according to Bluetooth, ultra wideband (WB), a ZigBee scheme, a radio frequency (RF) communication scheme, or an infrared (IR) communication scheme.

Further, the user input interface 150 can deliver a control signal input through a local key such as a power key, a channel key, a volume key, a setting key, etc., to the controller 170. A video signal video-processed by the controller 170 can be inputted into the display 180, and displayed as a video corresponding to the video signal. Further, the video signal video-processed by the controller 170 can be input into an external output device through the external device interface 135.

An audio signal processed by the controller 170 can be audio-output to the speaker 185. In addition, the audio signal processed by the controller 170 can be input into the external output device through the external device interface 135.

Also, the controller 170 can control an overall operation in the display device 100. Further, the controller 170 can control the display device 100 by a user instruction input through the user input interface 150, or an internal program, and can be connected to the network to allow the user to download a desired application or application list into the display device 100. The controller 170 allows channel information selected by the user to be output through the display 180 or the speaker 185 jointly with the processed video or audio signal.

Further, the controller 170 allows a video signal or an audio signal from an external device, e.g., a camera or a camcorder, which is input through the external device interface 135 to be output through the display 180 or the speaker 185 according to an external device video play instruction received through the user input interface 150. Meanwhile, the controller 170 can control the display 180 to display a video, and for example, can control the display 180 to display a broadcasting video input though the tuner 131, an external input video input through the external device interface 135, a video input through the network interface, or a video stored in the memory 140. In this case, the video displayed in the display 180 can be a still image or a moving picture, and can be a 2D video or 3D video.

Further, the controller 170 can control contents stored in the display device 100, received broadcasting contents, or external input contents input from the outside to be played, and the contents can be various forms such as a broadcasting video, an external input video, an audio file, a still video, a connected web screen, and a document file.

The wireless communication interface 173 can perform communication with an external device through wired or wireless communication. The wireless communication interface 173 can perform short-range communication with the external device. To this end, the wireless communication interface 173 can support the short-range communication by using at least one of Bluetooth^{™}, radio frequency identification (RFID), Infrared Data Association (IrDA), Ultra Wideband (UWB), ZigBee, Near Field Communication (NFC), WirelessFidelity (Wi-Fi), Wi-Fi Direct, and Wireless Universal Serial Bus (Wireless USB) technologies. The wireless communication interface 173 can support wireless communication between the display device 100 and a wireless communication system, between the display device 100 and another display device 100, or the display device 100 and a network at which the display device 100 (or an external server) is located through wireless area networks. The wireless area networks can be wireless personal area networks.

Here, another display device 100 can be a mobile terminal such as a wearable (e.g., a smartwatch, a smart glass, a head mounted display (HMD)) or a smartphone which is capable of interchanging data (or interlocking) with the display device 100 according to the present disclosure. The wireless communication interface 173 can detect (or recognize) a communicable wearable device around the display device 100.

Furthermore, when the detected wearable device is a device authenticated to communicate with the display device 100 according to the present disclosure, the controller 170 can transmit at least some of data processed by the display device 100 to the wearable device through the wireless communication interface 173. Accordingly, a user of the wearable device can use the data processed by the display device 100 through the wearable device.

The display 180 converts a video signal, a data signal, an OSD signal, and a control signal processed by the signal processing device 170 or a video signal, a data signal, etc., received by the external device interface 135 to generate a driving signal. Meanwhile, since the display device 100 illustrated in FIG. 1 is just an embodiment of the present disclosure, some of the illustrated components can be integrated, added, or omitted according to a specification of the display device 100 actually implemented.

That is, two or more components can be combined into one component or one component can be divided into two or more components as necessary. Further, a function performed in each block is for describing the embodiment of the present disclosure, and specific operations or devices thereof do not limit the scope of the present disclosure.

According to another embodiment of the present disclosure, the display device 100 can not include the tuner 131 and the demodulator 132, and receive and play a video through the network interface 133 or the external device interface 135 unlike a configuration illustrated in FIG. 1.

For example, the display device 100 can be implemented to be separated into an image processing device such as a set-top box for the broadcasting signal or contents according to various network services, and a content play device that plays the contents input from the image processing device.

In this instance, an operating method of the display device according to an embodiment of the present disclosure to be described below can also be performed by any one of the display device 100 described with reference to FIG. 1, and the image processing device such as the separate set-top box or the content play device including the display 180 and the speaker 185.

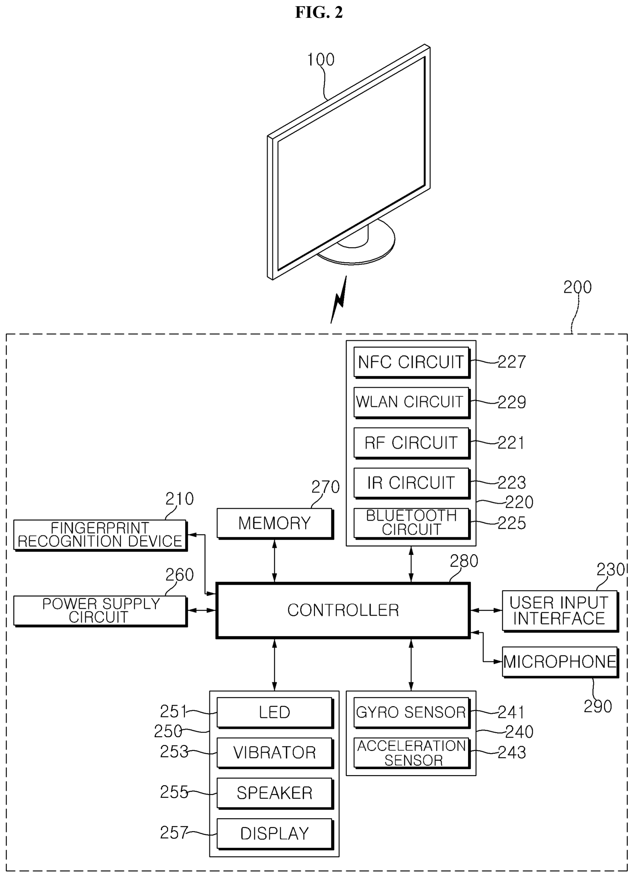

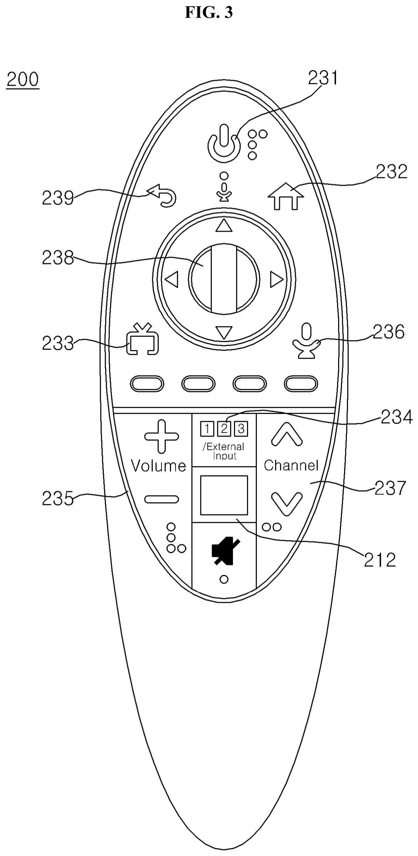

Next, a remote control device according to an embodiment of the present disclosure will be described with reference to FIGS. 2 and 3. In particular, Fig. 2 is a block diagram of a remote control device according to an embodiment of the present disclosure, and Fig. 3 is a diagram of a configuration of the remote control device according to an embodiment of the present disclosure.

First, referring to Fig. 2, the remote control device 200 can include a fingerprint recognizer 210, a wireless communication circuit 220, a user input interface 230, a sensor 240, an output interface 250, a power supply circuit 260, a memory 270, a controller 280, and a microphone 290.

As shown in Fig. 2, the wireless communication circuit 220 transmits and receives a signal to and from any one of the display devices the embodiments of the present disclosure described above. The remote control device 200 can include an RF circuit 221 which can transmit and receive a signal to and from the display device 100 according to an RF communication standard, and include an IR circuit 223 which can transmit and receive a signal to and from the display device 100 according to an IR communication standard. Further, the remote control device 200 can include a Bluetooth circuit 225 which can transmit and receive the signals to and from the display device 100 according to a Bluetooth communication standard. Further, the remote control device 200 can include an NFC circuit 227 which can transmit and receive a signal to and from the display device 100 according to a near field communication (NFC) communication standard, and include a WLAN circuit 229 which can transmit and receive a signal to and from the display device 100 according to a wireless LAN (WLAN) communication standard.

Further, the remote control device 200 transmits a signal containing information on a movement of the remote control device 200 to the display device 100 through the wireless communication circuit 220. Meanwhile, the remote control device 200 can receive the signal transmitted by the display device 100 through the RF circuit 221, and as necessary, transmit instructions related to power on/off, channel change, volume change, etc., to the display device 100 through the IR circuit 223.

The user input interface 230 can include a key pad, a button, a touch pad, or a touch screen. The user manipulates the user input interface 230 to input an instruction related to the display device 100 into the remote control device 200. When the user input interface 230 includes a hard key button, the user can input the instruction related to the display device 100 into the remote control device 200 through a push operation of the hard key button. This will be described below with reference to FIG. 3.

Referring to FIG. 3, the remote control device 200 can include a plurality of buttons. The plurality of buttons can include a fingerprint recognition button 212, a power button 231, a home button 232, a live button 233, an external input button 234, a volume control button 235, a voice recognition button 236, a channel change button 237, an OK button 238,1 and a backward button 239.

The fingerprint recognition button 212 can be a button for recognizing a fingerprint of the user. As an embodiment, the fingerprint recognition button 212 is capable of perform a push operation, and can also receive the push operation and a fingerprint recognition operation. The power button 231 can be a button for turning on/off a power supply of the display device 100. The home button 232 can be a button for moving to a home screen of the display device 100.

The live button 233 can be a button for displaying a real-time broadcasting program, the external input button 234 can be a button for receiving an external input connected to the display device 100, the volume control button 235 can be a button for controlling a size of a volume output by the display device 100, and the voice recognition button 236 can be a button for receiving a voice of the user, and recognizing the received voice. Further, the channel change button 237 can be a button for receiving a broadcasting signal of a specific broadcasting channel, the OK button 238 can be a button for selecting a specific function, and the backward button 239 can be a button for returning to a previous screen.

Referring again to FIG. 2, the user input interface 230 includes the touch screen, the user can input the instruction related to the display device 100 into the remote control device 200 by touching a soft key of the touch screen. Further, the user input interface 230 can include various types of input means which can be manipulated by the user, such as a scroll key or a jog key, and the embodiment does not limit the scope of the present disclosure.

The sensor 240 can include a gyro sensor 241 or an acceleration sensor 243, and the gyro sensor 241 can sense information on a movement of the remote control device 200. For example, the gyro sensor 241 can sense information on an operation of the remote control device 200 based on x, y, and z axes, and the acceleration sensor 243 can sense information on a movement speed of the remote control device 200. Meanwhile, the remote control device 200 can further include a distance measurement sensor to a distance from the display 180 of the display device 100.

The output interface 250 can output a video or audio signal corresponding to manipulation of the user input interface 230 or corresponding to the signal transmitted by the display device 100. The user can recognize whether to manipulate the user input interface 230 or whether to control the display device 100 through the output interface 250.

As an example, the output interface 250 can include an LED 251 lighted when the user input interface 230 is manipulated or the signals are transmitted to and received from the display device 100 through the wireless communication circuit 220, a vibration module 253 generating vibration, a speaker 255 outputting a sound, or a display 257 outputting a video. Further, the power supply circuit 260 supplies power to the remote control device 200, and the remote control device 200 stops power supplying to reduce power waste when the remote control device 200 does not move for a predetermined time.

The power supply circuit 260 can resume the power supply when a predetermined key provided in the remote control device 200 is manipulated. The memory 270 can store various types of programs, application data, etc., required for the control or the operation of the remote control device 200. When the remote control device 200 wirelessly transmits and receives the signal to and from the display device 100 through the RF circuit 221, the remote control device 200 and the display device 100 transmit and receive signals through a predetermined frequency band.

The controller 280 of the remote control device 200 can store and refer to information on a frequency band through which the signals can be wirelessly transmitted to and received from the display device 100 paired with the remote control device 200 in the memory 270. The controller 280 controls all matters related to the control of the remote control device 200. The controller 280 can transmit, to the display device 100, a signal corresponding to predetermined key manipulation of the user input interface 230 or a signal corresponding to the movement of the remote control device 200 sensed by the sensor 240 through the wireless communication unit 220. Further, the microphone 290 of the remote control device 200 can acquire the audio. There can be a plurality of microphones 290.

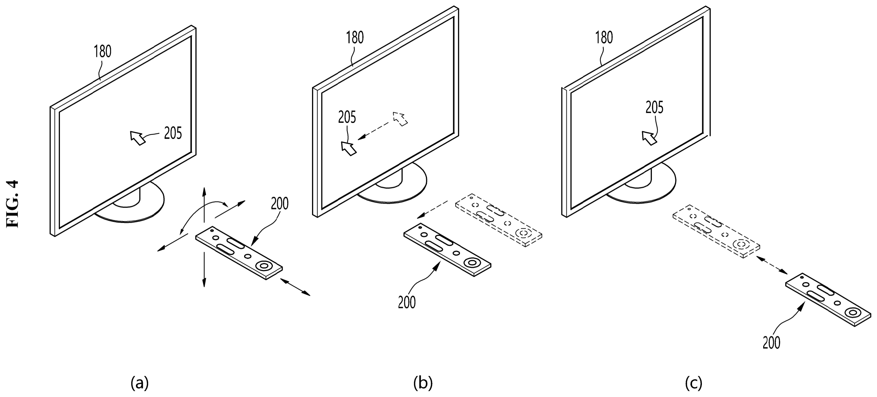

Next, FIG. 4 illustrates an example of utilizing the remote control device according to an embodiment of the present disclosure. In particular, FIG. 4(a) illustrates that a pointer 205 corresponding to the remote control device 200 is displayed in the display 180.

The user can move or rotate the remote control device up and down, and left and right. The pointer 205 displayed in the display 180 of the display device 100 corresponds to the movement of the remote control device 200. The remote control device 200 can be referred to as a space remote controller or a 3D pointing device because the pointer 205 is moved and displayed according to a movement in a 3D space as illustrated in the drawing.

FIG. 4(b) illustrates that when the user moves the remote control device 200 to the left, the pointer 205 displayed in the display 180 OF THE DISPLAY DEVICE 100 also moves to the left in response thereto. Information on the movement of the remote control device 200 sensed through the sensor of the remote control device 200 is transmitted to the display device 100. The display device 100 can calculate coordinates of the pointer 205 from the information on the movement of the remote control device 200. The display device 100 can display the pointer 205 to correspond to the calculated coordinates.

FIG. 4(c) illustrates of the user pressing a specific button in the remote control device 200, and moving the remote control device 200 away from the display 180. Therefore, a tuning area in the display 180 corresponding to the pointer 205 can be zoomed in, and enlarged and displayed.

Also, when the user moves the remote control device 200 closer to the display 180, the tuning area in the display 180 corresponding to the pointer 205 can be zoomed out, and reduced and displayed.

In addition, when the remote control device 200 is far away from the display 180, the tuning area can be zoomed out and when the remote control device 200 is close to the display 180, the tuning area can also be zoomed in. Further, in the state of pressing the specific button in the remote control device 200, recognition of up and down, and left and right movement can be excluded. That is, when the remote control device 200 moves to be far away from or close to the display 180, the up and down, and left and right movement can not be recognized, and only forward and backward movement can be recognized. In a state of not pressing the specific button in the remote control device 200, only the pointer 205 moves according to the up and down, and left and right movement of the remote control device 200.

Also, a movement speed or movement direction of the pointer 205 can correspond to the movement speed or movement direction of the remote control device 200. The pointer in the present disclosure means an object displayed in the display 180 in response to the operation of the remote control device 200. Accordingly, as the pointer 205, objects having various shapes are possible in addition to an arrow shape illustrated in the drawing. For example, the pointer 205 can be a concept including a dot, a cursor, a prompt, a thick contour line, etc. In addition, as well as it is possible that the pointer 205 is displayed to correspond to any one point of a horizontal axis and a vertical axis on the display 180, it is also possible that the pointer 205 is also displayed to correspond to a plurality of points including a line, a surface, etc.

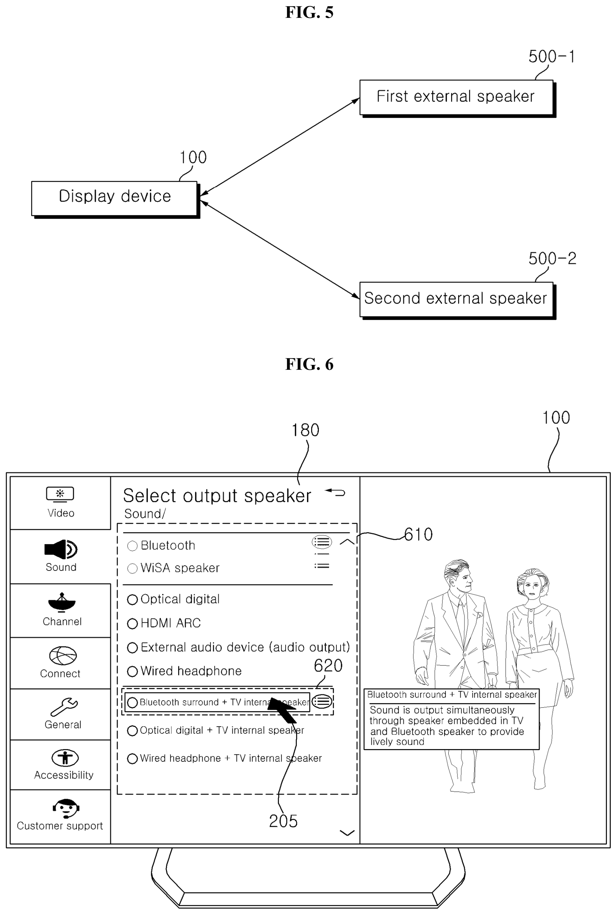

Next, Fig. 5 is a diagram illustrating an example of a configuration of a system according to an embodiment of the present disclosure. Referring to FIG. 5, the system 10 can include the display device 100 and one or more external speakers 500-1 and 500-2.

The display device 100 can establish a Bluetooth connection with the external speaker and perform paring and connection processes to the external speaker. Thereafter, the display device 100 can transmit an audio signal to the external speaker, and the external speaker can output an audio based on the audio signal.

Further, the display device 100 and one or more external speakers 500-1 and 500-2 can output the audio to generate a surround sound effect. For example, the display device 100 can output a main audio among all audio, and one or more external speakers 500-1 and 500-2 can output a sub audio among all audio. Also, the external speakers 500-1 and 500-2 can output an audio corresponding to the audio signal received from the display device 100 as it is.

In addition, the external speakers 500-1 and 500-2 can process the audio signal received from the display device 100, and output an audio corresponding to the processed audio signal. For example, the external speakers 500-1 and 500-2 can process the audio signal so that a sound effect according to equalizer setting is applied. For example, the external speakers 500-1 and 500-2 can process an audio signal by using a predetermined audio codec (e.g., Dolby Atmos). The external speakers 500-1 and 500-2 can be a soundbar of a bar form which elongates in a predetermined direction, a portable speaker, etc., but are not limited thereto.

Next, Figs. 6 to 9C are diagrams illustrating a connection between the display device and an external speaker according to embodiments of the present disclosure.

Referring to FIG. 6, the user can select an item 620 corresponding to the external speaker 500 and the speaker of the display device 100 among items of a list 610 for a device which outputs the audio by using the pointer 205 displayed in the display 180 in order to hear the audio through the external speaker 500. In the present disclosure, the connection is described based on that the audio being output through the display device 100 and the external speaker 500.

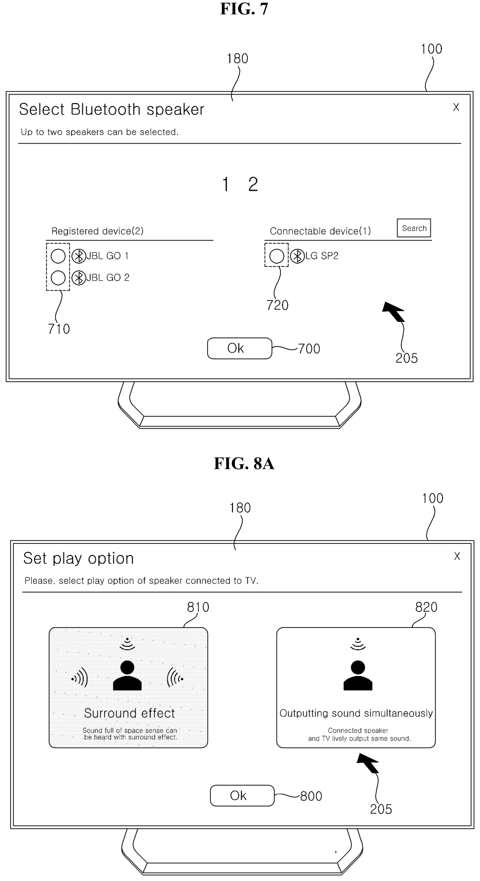

Referring to FIG. 7, the display device 100 can output a list of external speakers which are targets to be communication-connected. The list of the external speakers can include an external speaker pre-registered in the display device 100, a currently connectable external speaker, etc. The display device 100 can output objects 710 and 720 corresponding to the external speakers included in the list of the external speakers, respectively.

The user can select at least one of the objects 710 and 720 corresponding to the external speakers, respectively by using the pointer 205. The display device 100 can perform the paring and connection processes to the external speaker corresponding to the object selected by the user.

Referring to FIG. 8A, the display device 100 can output a screen (hereinafter, referred to as a play option setting screen) which sets a scheme of outputting the audio through the display 180. As shown, the play option setting screen can include an object 810 corresponding to providing surround sound and an object 820 corresponding to providing identical audio providing. The object 810 corresponding to providing the surround sound can correspond to a mode in which any one of the display device 100 and the external speaker 500 outputs the main audio and the other one outputs the sub audio to output a stereoscopic audio. The object 820 corresponding to providing the identical audio can correspond to a mode in which the display device 100 and the external speaker 500 outputs an identical audio.

In addition, the user can select one of the objects 810 and 820 included in the play option setting screen by using the pointer 205, and then select the object 800. The display device 100 can determine an operation mode (hereinafter, referred to as an audio mode) of outputting the audio based on a user input of selecting one of the objects 810 and 820 included in the play option setting screen.

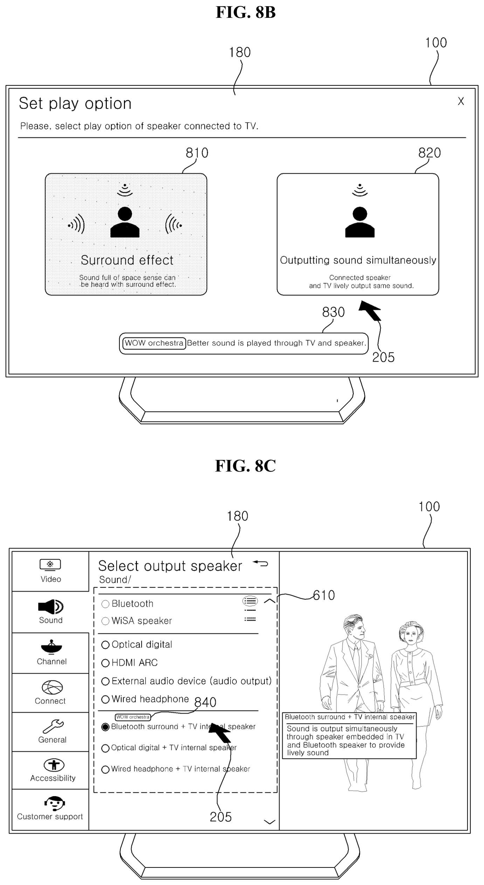

Referring to FIG. 8B, when a predetermined mode is determined as the audio mode, the display device 100 can output an object 830 indicating setting of the predetermined mode through the display 180. The predetermined mode can be a mode of outputting the audio to generate the surround sound effect by using the external speaker 500 which communicates with the display device 100 through a predetermined protocol, and the speaker of the display device 100.

Referring to FIG. 8C, when the audio mode is set to the predetermined mode, the display device 100 can output an indicator 840 indicating the setting of the predetermined mode. The indicator 840 indicating the setting of the predetermined mode can be displayed in an item of a list 610 for the device that outputs the audio.

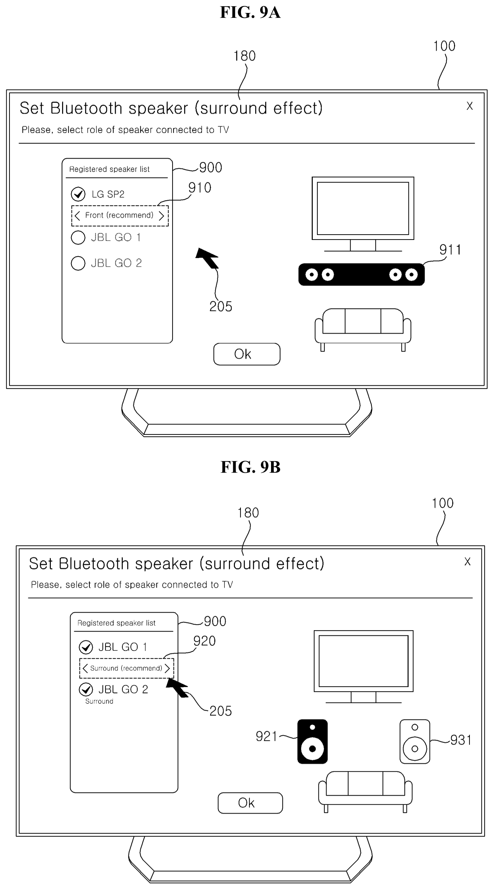

Referring to FIG. 9A, when the audio mode is set to the mode of outputting the audio to generate the surround sound effect, the display device 100 can output a screen (hereinafter, referred to as an audio type setting screen) which sets the type of audio output from the external speaker 500 which is communication-connected.

The audio type setting screen can include a list 900 for an external speaker registered in the display device 100. The list 900 for the external speaker registered in the display device 100 can include an external speaker 500 which is currently communication-connected. The list 900 for the external speaker registered in the display device 100 can also include an external speaker of which current communication connection is released.

The audio type setting screen can include an object 910 which sets the type of audio output from the external speaker 500. The user can change the type of audio output from the external speaker 500 by using the pointer 205. The audio type setting screen can include an object 911 corresponding to the external speaker 500 which is currently communication-connected. The user can change an in-screen position of the object corresponding to the external speaker 500 by using the pointer 205.

Further, the display device 100 can determine a position at which the external speaker 500 is disposed based on the display device 100 in response to the in-screen position of the object 911 corresponding to the external speaker 500. According to the embodiment, the display device 100 can also determine the position at which the external speaker 500 is disposed based on the display device 100 by identifying an object included in an image photographed by the provided camera.

In response to a change of the type of audio output from the external speaker 500 which is communication-connected, the audio mode of the display device 100 can be changed. For example, when the external speaker 500 is set to output the main audio, the audio mode can be set to a mode in which the external speaker 500 outputs the main audio and the display device 100 outputs the sub audio. Alternatively, when the external speaker 500 is set to output the sub audio, the audio mode can be set to a mode in which the display device 100 outputs the main audio and the external speaker 500 outputs the sub audio.

According to an embodiment, the display device 100 can recommend the type of audio output from the external speaker 500 which is communication-connected based on a specification, a position, etc., of the external speaker 500 which is communication-connected. For example, the display device 100 can recommend, as the main audio, the type of audio output from the external speaker 500 which is communication-connected when the external speaker 500 which is communication-connected is a predetermined type of device (e.g., the soundbar). For example, the display device 100 can recommend, as the main audio, the type of audio output from the external speaker 500 which is communication-connected when the external speaker 500 which is communication-connected is located on a front of the display device 100.

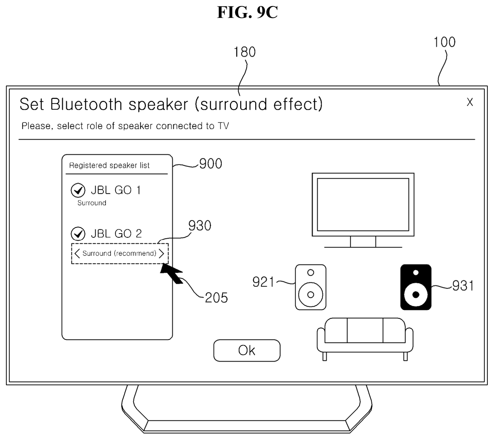

Referring to Figs. 9B and 9C, a plurality of external speakers 500 can be communication-connected to the display device 100. The audio type setting screen can include objects 921 and 931 corresponding to the plurality of external speakers 500 which are currently communication-connected. A first object 921 and a second object 931 can correspond to a first external speaker and a second external speaker, respectively. The user can change positions of the objects 921 and 931 corresponding to the plurality of external speakers 500 by using the pointer 205. In addition, the display device 100 can determine positions at which the plurality of external speakers 500 are disposed based on the display device 100 in response to the positions of the objects 921 and 931 corresponding to the plurality of external speakers 500.

Further, the audio type setting screen can include an object 920 which sets the type of audio output from the first external speaker and/or an object 930 which sets the type of audio output from the second external speaker. The user can also change the type of audio output from the external speaker by using the pointer 205.

For example, when the pointer 205 is located to correspond to the first external speaker among the items included in the list 900 for the external speaker, the object 920 can be activated and displayed, which sets the type of audio output from the first external speaker. Also, the first object 921 can be displayed in a predetermined color. Meanwhile, the display device 100 can also transmit a predetermined audio signal to the first external speaker. The first external speaker can output an audio corresponding to the audio signal received from the display device 100.

For example, when the pointer 205 is located to correspond to the second external speaker among the items included in the list 900 for the external speaker, the object 930 can be activated and displayed, which sets the type of audio output from the second external speaker. Also, the second object 931 can be displayed in a predetermined color. Meanwhile, the display device 100 can also transmit a predetermined audio signal to the second external speaker. The second external speaker can output an audio corresponding to the audio signal received from the display device 100.

In addition, the display device 100 can recommend the type of audio output from the external speaker 500 which is communication-connected based on the specification, the position, etc., of the external speaker 500 which is communication-connected. For example, the display device 100 can recommend, as the sub audio, the types of audio output from the first external speaker and the second external speaker which are communication-connected when neither the first external speaker nor the second external speaker are the predetermined type device (e.g., the soundbar). For example, the display device 100 can recommend, as the sub audio, the type of audio output from the external speaker 500 which is communication-connected when the plurality of external speakers 500 which are communication-connected are located at left and right sides of the display device 100.

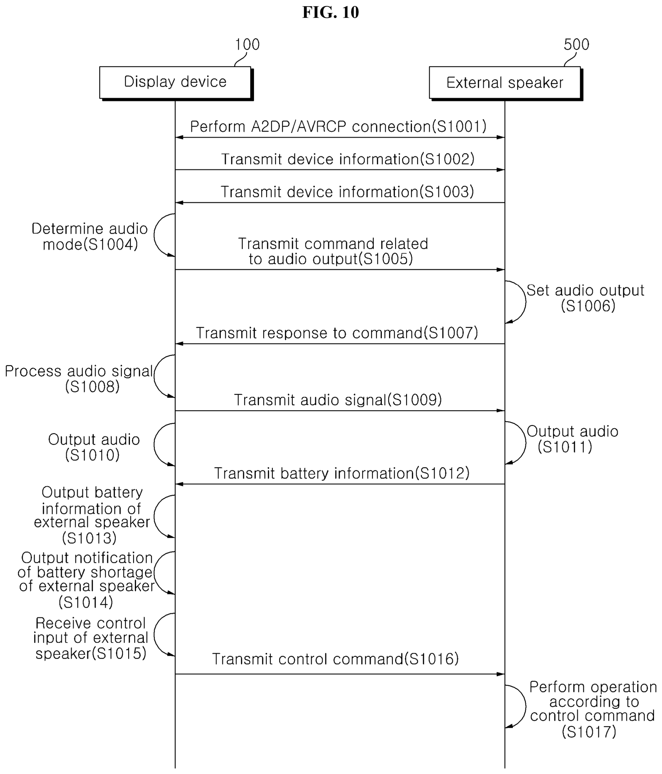

Next, Fig. 10 is a flowchart illustrating an operation of the system according to an embodiment of the present disclosure. Hereinafter, the operation will be described based on the display device 10 and the external speaker 500 supporting the Bluetooth communication standard.

Referring to FIG. 10, the display device 100 and the external speaker 500 can be connected to each other through a Bluetooth communication profile in operation S1001. The Bluetooth communication profile can include Advanced Audio Distribution Profile (A2DP) and Audio/Video Remote Control Profile (AVRCP). The A2DP can be a profile for transmitting audio data unidirectionally. The AVRCP can be a profile for wirelessly controlling the Bluetooth device. For example, the AVRCP can be a profile including information related to a control such as volume control, play, stop, etc., of an audio of the Bluetooth device.

The display device 100 can transmit device information of the display device 100 to the external speaker 500 in operation S1002 by using a vendor specific command (VSC) of Bluetooth. The present disclosure descriibes as an example that devices included in the system 10 deliver information, commands, etc., to each other by using the VSC.

Further, the device information of the display device 100 can include vendor information, device type information, information indicating that the display device 100 is a source device that provides the audio signal, information on a function provided by the display device 100, etc. The function provided by the display device 100 can include volume synchronization supporting, predetermined audio codec (e.g., Dolby Atmos) supporting, etc, and the volume synchronization supporting function includes controlling the volume of the external speaker 500 according to a volume stage of the display device 100.

In addition, the external speaker 500 can transmit device information of the external speaker 500 to the display device 100 in operation S1003. In particular, the device information of the external speaker 500 can include vendor information, device type information, information indicating that the external speaker 500 is a sink device that receives the audio signal, information on a delay of an audio output, etc.

The function provided by the external speaker 500 can include supporting volume synchronization, predetermined audio codec (e.g., Dolby Atmos), surround sound effect, power synchronization, etc. The function of power synchronization supporting includes controlling on/off of a power of the other one as a power of one of the display device 100 and the external speaker 500 is turned on/off.

Further, the delay information about the audio output can include a delay value indicating the delay of the audio output, which is a difference between a time when the audio is output from the display device 100 and a time when the audio is output from the external speaker 500. For example, the delay information of the audio output can include a delay value when one external speaker 500 is connected, and a delay value when two identical external speakers 500 are connected.

According to an embodiment, the display device 100 can acquire information on the external speaker 500 based on an extended inquiry response (EIR) transmitted by the external speaker 500 before connection through the Bluetooth communication profile. For example, the EIR can include protocol version information, device type information, information on the function provided by the external speaker 500, information on the delay of the audio output, etc.

In addition, the external speaker 500 can also transmit the device information of the external speaker 500 to the display device 100 without transmitting the device information of the display device 100. Further, the display device 100 can determine the audio mode in operation S1004 based on the setting for the surround sound effect and/or the device information of the external speaker 500.

For example, when the surround sound effect is set not to be provided, the audio mode can be set to a first audio mode. When the audio mode is set to the first audio mode, the speaker of the display device 100, and the external speaker 500 can output the same audio.

In another example, when the surround sound effect is set to be provided, and the external speaker 500 is not the predetermined type of device (e.g., the soundbar), the audio mode can be set to a second audio mode. When the audio mode is set to the second audio mode, the main audio can be output through the speaker of the display device 100, and the sub audio can be output through the external speaker 500.

In still another example, when the surround sound effect is set to be provided, and the external speaker 500 is the predetermined type of device (e.g., the soundbar), the audio mode can be set to a third audio mode. When the audio mode is set to the third audio mode, the sub audio can be output through the speaker of the display device 100, and the main audio can be output through the external speaker 500.

Further, as shown in FIG. 10, the display device 100 can transmit, to the external speaker 500, an instruction related to the output of the audio corresponding to the audio mode in operation S1005. The command related to the output of the audio can include a command for volume setting according to volume synchronization, a command for the use of a predetermined audio codec (e.g., Dolby Atmos), a command for application of a sound effect according to equalizer setting, a command for transmitting transmission of predetermined information, etc.

Then, the external speaker 500 can determine a setting related to the output of the audio based on the command related to the output of the audio received from the display device 100 in operation S1006. For example, the external speaker 500 can activate/deactivate the use of the predetermined audio codec (e.g., Dolby Atmos) according to the command for the use of the predetermined audio codec (e.g., Dolby Atmos). For example, the external speaker 500 can active/deactivate the application of the sound effect according to the equalizer setting according to the command for the application of the sound effect.

In addition, the external speaker 500 can transmit, to the display device 100, a response to the command related to the output of the audio received from the display device 100 in operation S1007. For example, the external speaker 500 can transmit, to the display device 100, a response to the setting according to the command related to the output of the audio, a response to predetermined information of which transmission is requested, etc.

The display device 100 then processes the audio signal in operation S1008. Hereinafter, an audio signal before processing by the display device 100 through the predetermined audio codec (e.g., Dolby Atmos), a predetermined equalizer setting value, etc., can be named as a first audio signal, and an audio signal after the processing can be named as a second audio signal. For example, the display device 100 can generate the second audio signal by processing the first audio signal through the predetermined audio codec (e.g., Dolby Atmos), the predetermined equalizer setting value, etc.

Also, the display device 100 can process the audio signal so that a specific sound effect is applied by using the predetermined audio codec (e.g., Dolby Atmos). For example, the display device 100 can process the audio signal so that a predetermined sound effect is applied by using the predetermined equalizer setting value. Meanwhile, the display device 100 can process the audio signal so that both the specific sound effect using the predetermined audio codec (e.g., Dolby Atmos) and the predetermined sound effect according to the predetermined equalizer setting value are applied.

As shown in FIG. 10, the display device 100 then transmits the audio signal to the external speaker 500 in operation S1009. The display device 100 can transmit the audio signal to the external speaker 500 as pulse code modulation (PCM) data. The display device 100 can also transmit the audio signal to the external speaker according to the audio mode.

For example, when the audio mode is set to the first audio mode or the second audio mode, the display device 100 can transmit, to the external speaker 500, the second audio signal to which the predetermined sound effect is applied. When the audio mode is set to the first audio mode or the second audio mode, the application of the sound effect according to the equalizer setting of the external speaker 500 can be in a deactivated state.

When the audio mode is set to the third audio mode, the display device 100 can transmit, to the external speaker 500, the first audio signal to which the predetermined sound effect is not applied. When the audio mode is set to the third audio mode, the application of the sound effect according to the equalizer setting of the external speaker 500 can be in an activated state.

Further, the display device 100 can transmit the audio signal to the external speaker 500 according to the activation/deactivation of the use of the predetermined audio codec (e.g., Dolby Atmos) of the external speaker 500. For example, the display device 100 can transmit the first audio signal which does not use the predetermined audio codec (e.g., Dolby Atmos) to the external speaker 500 in the activated state of the use of the predetermined audio codec (e.g., Dolby Atmos) of the external speaker 500. For example, the display device 100 can transmit the second audio signal to which the specific sound effect is applied using the predetermined audio codec (e.g., Dolby Atmos) in the deactivated state of the use of the predetermined audio codec (e.g., Dolby Atmos) of the external speaker 500.

In addition, the display device 100 can output the audio signal in operation S1010. For example, the display device 100 can output the audio through the speaker, based on the delay value for the delay of the audio output of the external speaker 500. The external speaker can also output the audio based on the audio signal received from the display device 100 in operation S1011.

Hereinafter, an audio signal after the external speaker 500 processes the audio signal received from the display device 100 through the predetermined audio codec (e.g., Dolby Atmos), the predetermined equalizer setting value, etc., can be named as a third audio signal. For example, the external speaker 500 can generate the third audio signal by processing the audio signal received from the display device 100 through the predetermined audio codec (e.g., Dolby Atmos), the predetermined equalizer setting value, etc. The external speaker 500 can then output an audio corresponding to the third audio signal.

In more detail, the external speaker 500 can process the audio signal received from the display device 100 according to the activation/deactivation of the application of the sound effect according to the equalizer setting. For example, the external speaker 500 can process the audio signal received from the display device 100 according to an equalizer setting corresponding to the predetermined sound effect in the activated state of the application of the predetermined sound effect, and then output an audio corresponding to the processed audio signal. Also, the external speaker 500 can output an audio corresponding to the audio signal received from the display device 100 as it is without processing the sound effect according to the equalizer setting in the deactivated state of the application of the sound effect according to the equalizer setting.

Further, the external speaker 500 can process the audio signal received from the display device 100 according to the activation/deactivation of the use of the predetermined audio codec (e.g., Dolby Atmos). For example, the external speaker 500 can process the audio signal received from the display device 100 so that the specific sound effect is applied by using the predetermined audio codec (e.g., Dolby Atmos) in the activated state of the use of the predetermined audio codec (e.g., Dolby Atmos), and then output an audio corresponding to the processed audio signal. Also, the external speaker 500 can process the audio corresponding to the audio signal received from the display device 100 without processing the specific sound effect using the predetermined audio codec (e.g., Dolby Atmos) in the deactivated state of the use of the predetermined audio codec (e.g., Dolby Atmos).

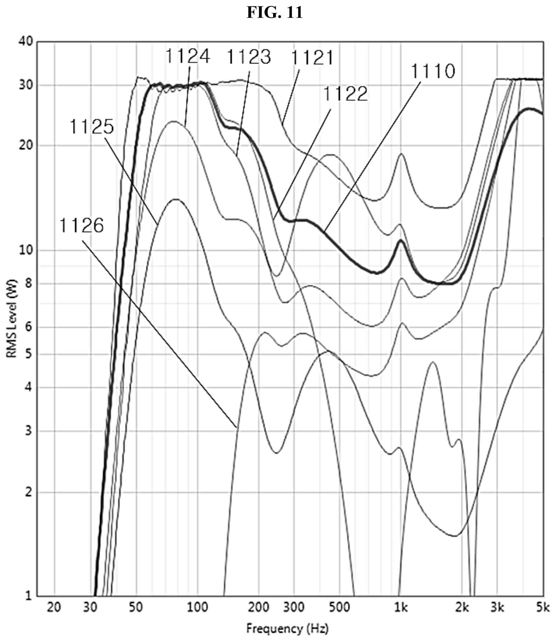

Next, referring to FIG. 11, the frequency response graph 1110 illustrating the sound effect according to the equalizer setting is not processed is different from the graphs 1121 to 1126 when various sound effects are applied. As shown, the frequency characteristics are different for each sound effect, so a different sound can be delivered to a user who hears the audio for each sound effect.

When an audio signal in which the predetermined sound effect is processed in the display device 100 is transmitted to the external speaker 500, and the external speaker 500 also performs processing for the predetermined sound effect with respect to the audio signal, the processing of the predetermined sound effect is duplicably performed, and thus an audio to which a sound effect completely different from the predetermined sound effect may be output from the external speaker 500. In this instance, the audio output from the display device 100 and the audio output from the external speaker 500 are not provided to the user as one unified audio.

Accordingly, when the external speaker 500 receives the second audio signal to which the predetermined sound effect is applied from the display device 100, the external speaker 500 needs to output the audio corresponding to the audio signal received from the display device 100 as it is without processing the sound effect of the external speaker 500. The need can also be similarly applied to the application of the specific sound effect using the predetermined audio codec (e.g., Dolby Atmos).

Referring back to FIG. 10, the external speaker 500 can transmit information on a battery to the display device 100 in operation S1012. For example, the external speaker 500 can transmit, to the display device 100, a percentage, a use time, etc., corresponding to a remaining electric energy of the battery. The display device 100 can then output information the information on the battery of the external speaker 500 through the display 180 in operation S1013. For example, the display device 100 can output an indicator for the remaining electric energy of the battery of the external speaker 500 through the display 180.

In more detail, the display device 100 can output a notification of a battery shortage of the external speaker 500 through the display 180 in operation S1014. For example, the display device 100 can output a notification indicating an external speaker 500 in which the remaining electric energy of the battery is less than a reference value through the display 180. The display device 100 can also output a screen including a model name, a position, a message for battery charging, etc., of the external speaker 500 in which the remaining electric energy of the battery is less than the reference value. Also, the display device 100 can output a screen including a user interface for setting of a low-power mode of reducing the use of power of the external speaker 500 in which the remaining electric energy of the battery is less than the reference value.

Further, the display device 100 can transmit an audio signal corresponding to the battery shortage to the external speaker 500 in which the remaining electric energy of the battery is less than the reference value. Also, the external speaker 500 that receives the audio signal corresponding to the battery shortage can output an audio indicating the battery shortage based on the audio signal corresponding to the battery shortage received from the display device 100.

In addition, the display device 100 can receive an input of controlling the external speaker 500 in operation S1015. For example, the display device 100 can receive a user input of turning on/off the power of the external speaker 500 from the remote control device 200. The display device 100 can also receive a user input of controlling the volume of the external speaker 500 from the remote control device 200. For example, the display device 100 can receive an input of setting the low-power mode through the user interface for the setting of the low-power mode of reducing the use of the power of the external speaker 500.

In addition, the display device 100 can transmit a command of controlling the external speaker 500 to the external speaker 500 in operation S1016. For example, the display device 100 can transmit a command of turning on/off the power, a command of controlling the volume, etc., to the external speaker 500 in response to the user input received from the remote control device 200. The display device 100 can also transmit a command of turning off the power, a command of reducing the volume, etc., to the external speaker 500 based on the input of setting the low-power mode of the external speaker 500. The external speaker 500 can then perform an operation based on a control command of received from the display device 100 in operation S1017.

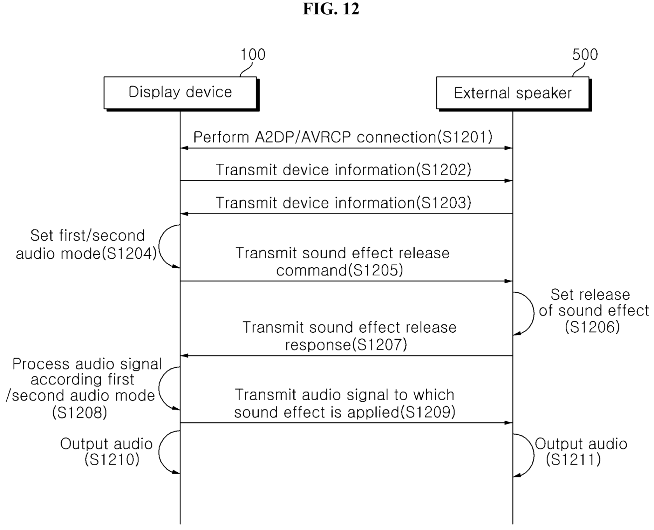

Next, Fig. 12 is a flowchart illustrating an operation of the system related to a sound effect depending on an audio mode according to an embodiment of the present disclosure. A detailed description of contents duplicated with the contents described above will be omitted.

Referring to FIG. 12, the display device 100 and the external speaker 500 can be connected to each other through a Bluetooth communication profile in operation S1201. For example, the display device 100 and the external speaker 500 can be connected to each other through A2DP and AVRCP.

In addition, the display device 100 can transmit device information of the display device 100 to the external speaker 500 in operation S1202. The external speaker 500 can also transmit device information of the external speaker 500 to the display device 100 in operation S1203.

Further, the display device 100 can determine the first audio mode or the second audio mode as the audio mode based on the setting for the surround sound effect and/or the device information of the external speaker 500 in operation S1204. The display device 100 can transmit a command (hereinafter, referred to as a sound effect release command) of deactivating the application of the sound effect according to the equalizer setting to the external speaker 500, in response to the audio mode being set to the first audio mode or the second audio mode in operation S1205.

The external speaker 500 can then release the application of the sound effect according to the equalizer setting based on the sound effect release command received from the display device 100 in operation S1206. That is, the external speaker 500 can be set to output the audio corresponding to the audio signal received from the display device 100 as it is.

In addition, the external speaker 500 can transmit, to the display device 100, a response to the sound effect release command in operation S1207. For example, the external speaker 500 can transmit, to the display device 100, a data value indicating that the application of the sound effect according to the equalizer setting is released according to the sound effect release command.

The display device 100 can then process the audio signal according to the audio mode in operation S1208. For example, the display device 100 can process the audio signal so that a predetermined sound effect is applied according to a predetermined equalizer setting value preset to be used by the display device 100.

According to an embodiment, the display device 100 can process the audio signal so that the sound effect is applied according to an equalizer setting value corresponding to a genre of contents. For example, the display device 100 can determine a genre of contents provided to the display device 100 through an operation of confirming metadata of contents, or analyzing contents based on an algorithm using machine learning. Also, the display device 100 can determine the equalizer setting value corresponding to the genre of the contents, and process the audio signal according to the determined equalizer setting value.

The display device 100 can then transmit the second audio signal to which the predetermined sound effect is applied to the external speaker 500 in operation S1209. For example, the display device 100 can transmit the audio corresponding to the second audio signal to which the predetermined sound effect is applied through the speaker in operation S1210.

Further, the external speaker 500 can output the audio based on the second audio signal to which the predetermined sound effect received from the display device 100 is applied in operation S1211. Also, the external speaker 500 can output the audio corresponding to the second audio signal received from the display device 100 without processing the sound effect according to the equalizer setting.

Through this, the duplicated application of the predetermined sound effect to the audio signal can be prevented, so both the display device 100 and the external speaker 500 can output an audio to which the predetermined sound effect is normally applied. Accordingly, one unified audio to which the predetermined sound effect can be provided to the user.

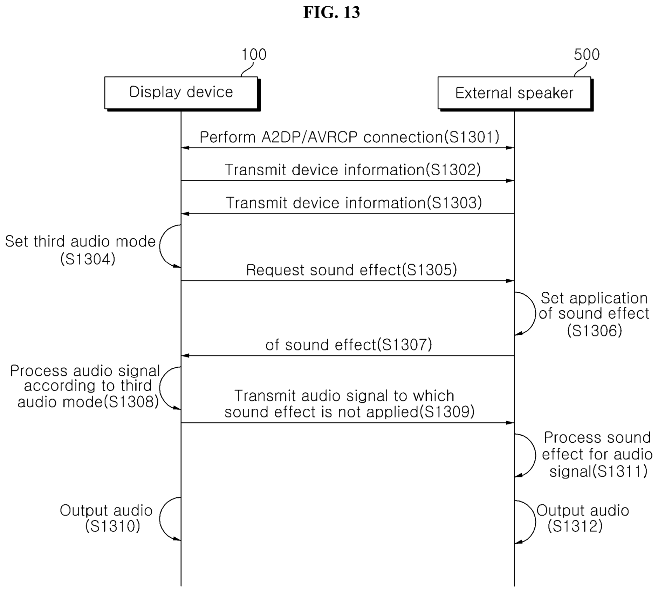

Next, Fig. 13 is a flowchart illustrating an operation of the system related to application of a sound effect depending on an audio mode according to another embodiment of the present disclosure. A detailed description of contents duplicated with the contents described above will be omitted.

Referring to FIG. 13, the display device 100 and the external speaker 500 can be connected to each other through a Bluetooth communication profile in operation S1301. For example, the display device 100 and the external speaker 500 can be connected to each other through A2DP and AVRCP.

In addition, the display device 100 can transmit the device information of the display device 100 to the external speaker 500 in operation S1302. The external speaker 500 can also transmit the device information of the external speaker 500 to the display device 100 in operation S1303. Further, the display device 100 can determine the third audio mode as the audio mode based on the setting for the surround sound effect and/or the device information of the external speaker 500 in operation S1304.

The display device 100 can transmit, to the external speaker 500, a command of requesting the external speaker 500 to transmit information on a predetermined sound effect which is preset in response to the audio mode being set to the third audio mode. The external speaker 500 can maintain a setting for application of the preset sound effect in operation S1306. For example, the external speaker 500 can set an equalizer setting value corresponding to the preset sound effect so that the sound effect preset to be used by the external speaker 500 is applied to the audio signal in the activated state of the application of the sound effect. Also, the external speaker 500 can set the equalizer setting value so that the audio corresponding to the audio signal received from the display device 100 is output as it is in the deactivated state of the application of the sound effect.

The external speaker 500 can then transmit information on the preset sound effect to the display device 100 in operation S1307. For example, the external speaker 500 can transmit, to the display device 100, information on whether to activate/deactivate of the application of the sound effect, the information on the preset sound effect, etc.

In addition, the display device 100 can adjust a setting for the output of the audio based on the information on the predetermined sound effect preset in the external speaker 500, which is received from the external speaker 500. For example, when the application of the sound effect is deactivated in the external speaker 500, the display device 100 can deactivate the application of the sound effect in the display device 100. When the application of the sound effect is activated in the external speaker 500, the display device 100 can set an equalizer setting value corresponding to the predetermined sound effect present in the external speaker 500 so that the predetermined sound effect preset in the external speaker 500 is applied to the audio signal.

The display device 100 can process the audio signal according to the audio mode in operation S1308. For example, the display device 100 can process the audio signal so that the predetermined sound effect is applied according to the equalizer setting value corresponding to the predetermined sound effect present in the external speaker 500. The display device 100 can also transmit the first audio signal to which the sound effect according to the equalizer setting is not applied to the external speaker 500 in operation S1309.

Further, the display device 100 can output the audio corresponding to the second audio signal to which the predetermined sound effect preset in the external speaker is applied through the speaker in operation S1310. The external speaker 500 can then process the audio signal received from the display device 100 so the predetermined sound effect preset in the external speaker 500 is applied in operation S1311. The external speaker 500 can process the audio signal received from the display device 100 according to the equalizer setting corresponding to the predetermined sound effect preset in the external speaker 500. The external speaker 500 can also output the audio corresponding to the second audio signal to which the predetermined sound effect is applied in operation S1312.

Through this, duplicated application of the predetermined sound effect to the audio signal can be prevented, so both the display device 100 and the external speaker 500 can output an audio to which the predetermined sound effect is normally applied. Accordingly, one unified audio to which the predetermined sound effect can be provided to the user.

According to an embodiment, when the audio mode is set to the third audio mode, the display device 100 can also deactivate the application of the sound effect according to the equalizer setting of the external speaker 500. In this instance, the display device 100 can transmit the second audio signal to which the predetermined sound effect is applied to the external speaker 500. Further, the external speaker 500 can output the audio corresponding to the audio signal received from the display device 100 without processing the sound effect according to the equalizer setting.

Even in this instance, the duplicated application of the predetermined sound effect to the audio signal can be prevented, so both the display device 100 and the external speaker 500 can output an audio to which the predetermined sound effect is normally applied. Accordingly, one unified audio to which the predetermined sound effect can be provided to the user.

When the information on the sound effect preset in the external speaker 500 is not received, the display device 100 can also deactivate the application of the sound effect according to the equalizer setting of the external speaker 500. In this instance, the display device 100 can transmit the second audio signal to which the sound effect preset to be used by the display device 100 is applied to the external speaker 500.

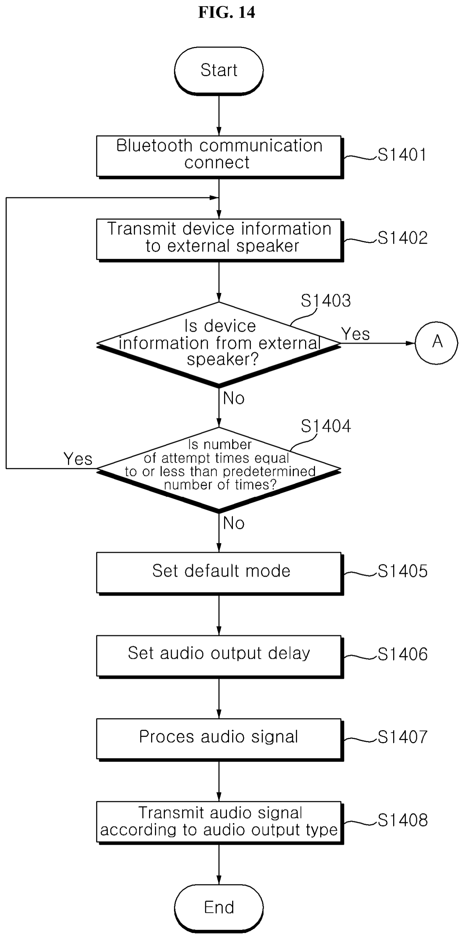

Next, Figs. 14 to 16 are flowcharts illustrating an operating method of a display device according to an embodiment of the present disclosure. A detailed description of contents duplicated with the contents described in Figs. 10 to 13 will be omitted.

Referring to FIG. 14, the display device 100 can perform Bluetooth-connection with the external speaker 500 in operation S1401. For example, the display device 100 can be connected to the external speaker 500 through A2DP and AVRCP.

The display device 100 can then transmit the device information of the display device 100 to the external speaker 500 in operation S1402. The display device 100 can determine whether the device information of the external speaker 500 is received from the external speaker 500 in operation S1403.

When at least a part of the device information of the external speaker 500 is not received (No in operation S1403), the display device 100 can confirm whether the number of times of attempting to receive the device information of the external speaker 500 is equal to or less than a predetermined number of times (e.g., three times) in operation S1404.

Further, the display device 100 can attempt to receive the device information of the external speaker 500 again based on the number of times of attempting to receive the device information of the external speaker 500 being equal to or less than the predetermined number of times (Yes in operation S1404). For example, the display device 100 can transmit the device information of the display device 100 to the external speaker 500 again. Also, the display device 100 can transmit a command of transmitting the device information of the external speaker 500 to the external speaker 500.

In addition, the display device 100 can set a default mode as the audio mode based on the number of times of attempting to receive the device information of the external speaker 500 being more than the predetermined number of times (No in S1404). Here, the default mode can be a mode of processing the audio signal according to a setting preset in the display device 100, and transmitting the audio signal to the external speaker 500 regardless of the external speaker 500.

The display device 100 can also set a delay value for a delay of an audio output of the external speaker 500 in operation S1406. For example, the display device 100 can transmit a preset test audio signal to the external speaker 500 based on a failure to receiving the device information of the external speaker 500. The display device 100 can also transmit a command for audio reception to the remote control device 200 so that the remote control device 200 receives an audio through the microphone 290.

Further, the external speaker 500 can output an audio corresponding to the audio test signal received from the display device 100. The remote control device 200 can then transmit data regarding the audio received through the microphone 290 to the display device 100. The data regarding the audio transmitted by the remote control device 200 can include data regarding a waveform of the audio received through the microphone 290.

In addition, the display device 100 can set the delay value for the delay of the audio output of the external speaker 500 based on the data regarding the audio received from the remote control device 200. For example, the display device 100 can set the delay value for the delay of the audio output of the external speaker 500 by comparing the waveform of the audio included in the data regarding the audio, and a waveform of the test audio signal.

Also, the display device 100 can process an audio signal in operation S1407 and output an audio corresponding to the processed audio signal. For example, the display device 100 can process the audio signal so that a specific sound effect is applied by using the predetermined audio codec (e.g., Dolby Atmos). In another example, the display device 100 can process the audio signal so that a predetermined sound effect is applied by using the predetermined equalizer setting value.

Further, the display device 100 can transmit the audio signal to the external speaker 500 according to an output type of the audio in operation S1408. For example, when the surround sound effect is set not to be provided in the external speaker, the display device 100 can transmit, to the external speaker 500, the second audio signal to which the predetermined sound effect is applied. When the surround sound effect is set to be provided in the external speaker, the display device 100 can transmit, to the external speaker 500, the first audio signal to which the predetermined sound effect is not applied.

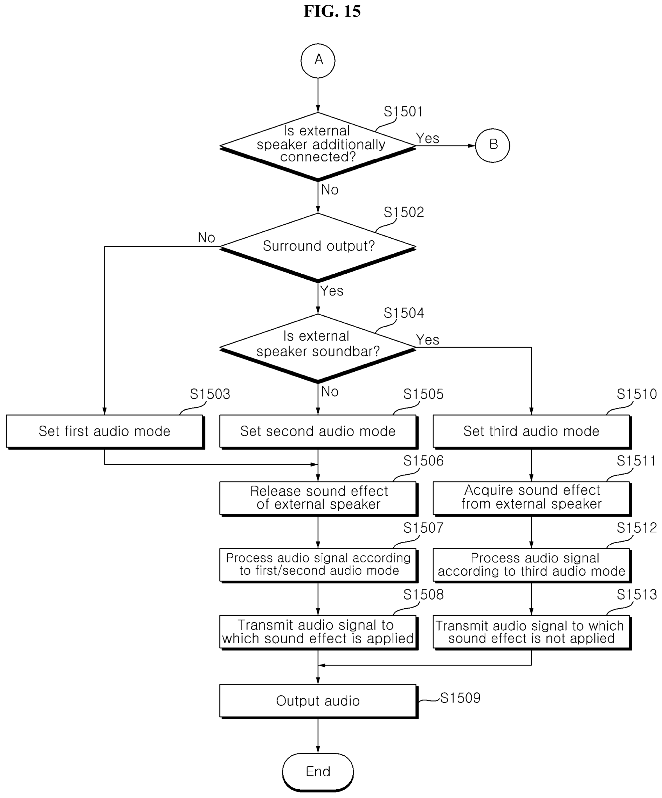

Referring to FIG. 15, when the device information of the external speaker 500 is received (Yes in operation S1403 in FIG. 14), the display device 100 can determine whether the external speaker 500 is additionally connected in operation S1501. For example, when a first external speaker 500-1 is communication-connected to the display device 100, the display device 100 can determine whether a second external speaker 500-2 is communication-connected. Hereinafter, the external speaker 500 pre-connected to the display device 100 is described as the first external speaker 500-1, and the additionally connected external speaker 500 is described as the second external speaker 500-2.

When the external speaker 500 is not additionally connected (No in operation S1501), the display device 100 can confirm whether the surround sound effect is set to be provided in operation S1502. When the surround sound effect is set not to be provided (No in operation S1502), the display device 100 can set the audio mode to the first audio mode in operation S1503.

When the surround sound effect is set to be provided (Yes in operation S1502), the display device 100 can determine whether the external speaker 500 is a predetermined type of device (e.g., a soundbar) based on the device information of the external speaker 500. When the external speaker 500 is not the predetermined type of device (e.g., the soundbar) (No in operation S1504), the display device 100 can set the audio mode to the second audio mode in operation S1505.

In addition, the display device 100 can transmit the sound effect release command to the external speaker 500 in response to setting the audio mode to the first audio mode or the second audio mode, and release the application of the sound effect according to the equalizer setting in operation S1506. The display device 100 can process the audio signal according to the first audio mode or the second audio mode in operation S1507. For example, the display device 100 can process the audio signal so that a predetermined sound effect is applied according to a predetermined equalizer setting value preset to be used by the display device 100.

Further, the display device 100 can transmit the second audio signal to which the sound effect preset to be used by the display device 100 is applied to the external speaker 500. The display device 100 can output an audio corresponding to the audio signal through the speaker in operation S1509. For example, the display device 100 can output an audio corresponding to the second audio signal to which the predetermined sound effect is applied.

Meanwhile, when the external speaker 500 is the predetermined type of device (e.g., the soundbar) (Yes in operation S1504), the display device 100 can set the audio mode to the third audio mode in operation S1510. The display device 100 can acquire information on the predetermined sound effect preset in the external speaker from the external speaker 500 in operation S1511. The display device 100 can also adjust a setting for the output of the audio based on the information on the predetermined sound effect preset in the external speaker 500, which is received from the external speaker 500.

In addition, the display device 100 can process the audio signal according to the third audio mode in operation S1512. For example, the display device 100 can process the audio signal so that the predetermined sound effect is applied according to the equalizer setting value corresponding to the predetermined sound effect present in the external speaker 500. The display device 100 can transmit the first audio signal to which the sound effect according to the equalizer setting is not applied to the external speaker 500 in operation S1513.

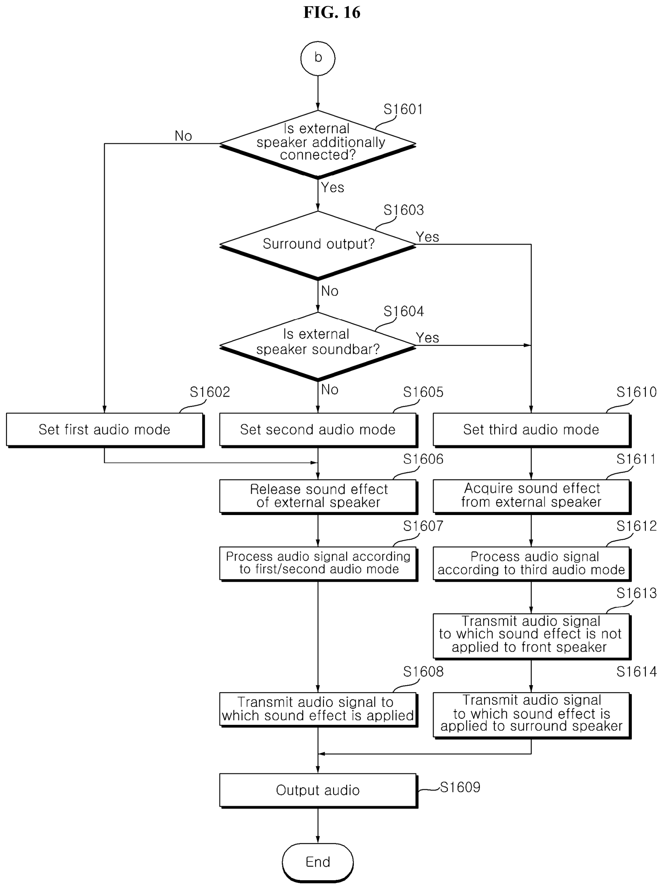

Referring to FIG. 16, when the external speaker 500 is additionally connected (Yes in operation S1601), the display device 100 can confirm whether the surround sound effect is set to be provided in operation S1601. When the surround sound effect is set not to be provided (No in operation S1601), the display device 100 can set the audio mode to the first audio mode in operation S1602. For example, when the audio mode is set to the first audio mode, and when the second external speaker 500-2 is additionally connected, the audio mode can be maintained to the first audio mode.

When the surround sound effect is set to be provided (Yes in operation S1603), the display device 100 can determine whether the first external speaker 500-1 is the predetermined type of device (e.g., the soundbar) in operation S1603. When the first external speaker 500-1 is not the predetermined type of device (e.g., the soundbar) (No in operation S1604), the display device 100 can determine whether the second external speaker 500-2 is the predetermined type of device (e.g., the soundbar) in operation S1604.

When the first external speaker 500-1 is not the predetermined type of device (e.g., the soundbar), the display device 100 can determine whether the second external speaker 500-2 is the predetermined type of device (e.g., the soundbar) in operation S1604. For example, in a state in which the audio mode is set to the second audio mode, when the second external speaker 500-2 is not the predetermined type of device (e.g., the soundbar), the audio mode can be maintained to the second audio mode.

Further, the display device 100 can transmit the sound effect release command to a plurality of external speakers 500-1 and 500-2 in response to setting the audio mode to the first audio mode or the second audio mode, and release the application of the sound effect according to equalizer settings of the plurality of external speakers 500-1 and 500-2 in operation S1606.

The display device 100 can process the audio signal according to the first audio mode or the second audio mode in operation S1607. In addition, the display device 100 can transmit the second audio signal to which the sound effect preset to be used by the display device 100 is applied to the plurality of external speakers 500-1 and 500-2. The display device 100 can output the audio corresponding to the audio signal through the speaker in operation S1609. For example, the display device 100 can output the audio corresponding to the second audio signal to which the predetermined sound effect is applied.

Meanwhile, when the first external speaker 500-1 is the predetermined type of device (e.g., the soundbar) and/or when the second external speaker 500-2 is the predetermined type of device (e.g., the soundbar) (Yes in operations S1603 and S1604), the display device 100 can set the audio mode to the third audio mode in operation S1610. For example, when the first external speaker 500-1 is the predetermined type of device (e.g., the soundbar), and if the second external speaker 500-2 which is the predetermined type of device (e.g., the soundbar) is additionally connected, the audio mode can be set to the third audio mode. At this time, the main audio can be set to be output from the first external speaker 500-1, and the sub audio can be set to be output from the second external speaker 500-2.

For example, when the first external speaker 500-1 is the predetermined type of device (e.g., the soundbar), and if the second external speaker 500-2 which is the predetermined type of device (e.g., the soundbar) is additionally connected, the audio mode can be set to the third audio mode. The main audio can be set to be output from both of the plurality of external speakers 500-1 and 500-2, and the sub audio can be set to be output from the display device 100.

When the first external speaker 500-1 is not the predetermined type of device (e.g., the soundbar) , if the second external speaker 500-2 which is the predetermined type of device (e.g., the soundbar) is additionally connected, the audio mode can be set to the third audio mode. At this time, the main audio can be set to be output from the second external speaker 500-2.

According to an embodiment, when the first external speaker 500-1 is the predetermined type of device (e.g., the soundbar), and if the second external speaker 500-2 which is the predetermined type of device (e.g., the soundbar) is additionally connected, the display device 100 can output a screen including a message that inquires whether to change the setting not to provide the surround sound effect through the display 180. That is, the display device 100 can output a screen including a message that inquires whether to set the audio mode to the first audio mode through the display 180.

In addition, the display device 100 can set the audio mode to the first audio mode based on reception of a user input which changes the setting not to provide the surround sound effect. Meanwhile, the display device 100 can set the audio mode to the third audio mode based on reception of a user input which maintains the setting to provide the surround sound effect.

According to an embodiment, when the first external speaker 500-1 is the predetermined type of device (e.g., the soundbar), and if the second external speaker 500-2 which is the predetermined type of device (e.g., the soundbar) is additionally connected, the display device 100 can also output a screen including a message that inquires whether to set the audio mode to the second audio mode through the display 180. Further, the display device 100 can set to the audio mode to the second audio mode based on the reception of the user input which sets the audio mode to the second audio mode.

Hereinafter, the external speaker 500 which outputs the main audio can be named as a front speaker, and the external speaker 500 which outputs the sub audio can be named as a surround speaker. The display device 100 can acquire the information on the predetermined sound effect preset in the front speaker 500 from the front speaker 500 in operation S1511. The display device 100 can adjust the setting for the output of the audio based on the information on the predetermined sound effect preset in the front speaker 500, which is received from the front speaker 500.

Meanwhile, when the plurality of external speakers 500-1 and 500-2 are both the front speakers, the display device 100 can acquire the information on the preset predetermined sound effect from one of the plurality of external speakers 500-1 and 500-2. For example, the display device 100 can acquire the information on the preset predetermined sound effect from the first external speaker 500-1 of the plurality of external speakers 500-1 and 500-2. At this time, the display device 100 can deliver, the second external speaker 500-2, the information on the predetermined sound effect received from the first external speaker 500-1. The second external speaker 500-2 can adjust the setting for the output of the audio based on the information on the preset predetermined sound effect received from the display device 100.

The display device 100 can process the audio signal according to the third audio mode in operation S1612. For example, the display device 100 can process the audio signal so that the predetermined sound effect is applied according to the equalizer setting value corresponding to the predetermined sound effect preset in the front speaker 500. The display device 100 can transmit the first audio signal to which the sound effect according to the equalizer setting is not applied to the front speaker 500 in operation S1613.

The display device 100 can transmit, to the surround speaker 500, the second audio signal to which the predetermined sound effect is applied according to the equalizer setting value corresponding to the predetermined sound effect preset in the front speaker 500 in operation S1613.

According to an embodiment, when a plurality of different external speakers 500-1 and 500-2 are communication-connected, the display device 100 can set the delay value for the delay of the audio output for each of the plurality of external speakers 500-1 and 500-2. The display device 100 can output the audio based on the delay value for the delay of the audio output set for each of the plurality of external speakers 500-1 and 500-2. For example, the display device 100 can output the audio based on a larger value of the delay values for the plurality of external speakers 500-1 and 500-2, respectively. For example, the display device 100 can also output the audio based on an average of the delay values for the plurality of external speakers 500-1 and 500-2, respectively.

Meanwhile, the display device 100 can also transmit the audio signals to the plurality of external speakers 500-1 and 500-2, respectively based on the delay value for the delay of the audio output set for each of the plurality of external speakers 500-1 and 500-2. The display device 100 can determine the delay value for the delay of the audio output set for each of the plurality of external speakers 500-1 and 500-2 in various schemes.

For example, the display device 100 can transmit a first test audio signal to the first external speaker 500-1, and transmit a second test audio signal to the second external speaker 500-2. Each of the plurality of external speakers 500-1 and 500-2 can output an audio corresponding to a test audio signal received from the display device 100. The remote control device 200 can transmit data regarding the audio received through the microphone 290 to the display device 100. The display device 100 can set the delay value for the delay of the audio output for each of the plurality of external speakers 500-1 and 500-2 based on the data regarding the audio received from the remote control device 200.

For example, the display device 100 can acquire information on buffer sizes from the plurality of external speakers 500-1 and 500-2. At this time, the display device 100 can set the delay value for the delay of the audio output for each of the plurality of external speakers 500-1 and 500-2 in response to the buffer sizes received from the plurality of external speakers 500-1 and 500-2. As the buffer sizes are larger, the delay value for the delay of the audio output can become larger.

According to an embodiment, the display device 100 can set the audio mode again when the communication connection of any one of the plurality of external speakers 500-1 and 500-2 is released. At this time, the display device 100 can determine the audio mode based on setting for the surround sound effect and/or the device information of any one of the plurality of external speakers 500-1 and 500-2.

According to an embodiment, the display device 100 can determine whether to return to a previous mode set in the state in which only the first external speaker 500-1 is communication-connected when the communication connection of any one of the plurality of external speakers 500-1 and 500-2 is released. For example, the display device 100 can output a screen including a message that inquires whether to return to the previous mode through the display 180 500-1 and 500-2 is released.

The display device 100 can set the audio mode to the previous mode based on reception of a user input for returning to the previous mode. Meanwhile, the display device 100 can determine the audio mode based on the setting for the surround sound effect and/or the device information of the external speaker 500 which is communication-connected, based on reception of a user input for not returning to the previous mode.

Further, as described above, according to at least one embodiment of the present disclosure, the audio signal is processed by setting the audio mode corresponding to the external speaker to provide an audio signal optimized to the external speaker. Further, according to at least one embodiment of the present disclosure, the audio mode corresponding to the external speaker can be recommended.

In addition, according to at least one embodiment of the present disclosure, by controlling the setting for the audio output of the external speaker according to the audio mode, one unified audio can be provided. Further, according to at least one embodiment of the present disclosure, by processing the audio signal according to the setting for the audio output of the external speaker, one unified audio can be provided. In addition, according to at least one embodiment of the present disclosure, a state of the external speaker can be provided to a user, and a control according to the state of the external speaker can be performed.

Referring to FIGS. 1 to 16, the display device 100 according to one aspect of the present disclosure can include: a display 180; a speaker 185; a wireless communication interface 173 communicating with at least one external speaker 500; and a controller 170, and the controller can transmit a command for an output of an audio to the external speaker 500 based on a setting of an audio mode of outputting audio through the speaker 185 and the external speaker 500, transmit a first audio signal to the external speaker 500 based on the command transmitted to the external speaker 500 being a first command, and transmit a second audio signal generated by processing the first audio signal to the external speaker 500 based on the command transmitted to the external speaker 500 being a second command.

Further, according to one aspect of the present disclosure, the first command can include a command for activating a predetermined function of processing the audio signal received from the display device 100, and the second command can include a command for deactivating the predetermined function.

In addition, according to one aspect of the present disclosure, the controller 170 can receive, from the external speaker 500, device information including the type of external speaker 500, set the audio mode to a first audio mode when the same audio is preset to be output through the speaker 185 and the external speaker 500, set the audio mode to a second audio mode when different audio are preset to be output through the speaker 185 and the external speaker 500, and the type of external speaker 500 is not a predetermined type, and set the audio mode to a third audio mode when different audio are preset to be output through the speaker 185 and the external speaker 500, and the type of external speaker 500 is the predetermined type.

In addition, according to one aspect of the present disclosure, the controller 170 can transmit the second command to the external speaker 500 based on the setting of any one of the first audio mode and the second audio mode, and transmits the first command to the external speaker 500 based on the setting of the third audio mode.

In addition, according to one aspect of the present disclosure, the display device 100 can further include a user input interface receiving a user input 150, and the controller 170 can output a screen which sets the type of audio output from at least one of the speaker 185 and the external speaker 500 through the display 180, set the audio mode to the second audio mode based on a first user input which sets a main audio to be output through the speaker 180, and a sub audio to be output through the external speaker 500, and set the audio mode to the third audio mode based on a second user input which sets the sub audio to be output through the speaker 180, and the main audio to be output through the external speaker 500.

In addition, according to one aspect of the present disclosure, the controller 170 can output a predetermined audio through the speaker 185 in response to the setting of the type of audio output from the speaker 185, and transmit an audio signal corresponding to the predetermined audio through the external speaker 500 in response to the setting of the type of audio output from the external speaker 500.

In addition, according to one aspect of the present disclosure, the controller 170 can display a first object which recommends the output of the main audio for the external speaker 500 on the screen when the type of external speaker 500 is the predetermined type, and display a second object which recommends the output of the sub audio for the external speaker 500 on the screen when the type of external speaker 500 is not the predetermined type.

In addition, according to one aspect of the present disclosure, the controller 170 can set the audio mode to a fourth audio mode when the device information is not received from the external speaker 500, transmit the second audio signal to the external speaker 500 when the same audio is preset to be output through the speaker 185 and the external speaker 500 in the fourth audio mode, and transmit the first audio signal to the external speaker 500 when different audio are preset to be output through the speaker 185 and the external speaker 500 in the fourth audio mode.

In addition, according to one aspect of the present disclosure, the display device 100 can further include a user input interface 150 receiving data from a remote control device, and the controller 170 can transmit a third audio signal to the external speaker 500 when the device information is not received from the external speaker 500, receive, from the remote control device 200, data regarding an audio received through a microphone 290 included in the remote control device 200, and set asset value for a delay of the audio output of the external speaker 500 by comparing the data regarding the audio and the third audio signal.

In addition, according to one aspect of the present disclosure, the first command can include a command for requesting transmission of a first setting value related to the predetermined function, preset in the external speaker 500, and the controller 170 can determine a second setting value related to the predetermined function preset in the display device 100 in response to the first setting value received from the external speaker 500, and process the first audio signal based on the second setting value.

In addition, according to one aspect of the present disclosure, the controller 170 can receive, from the external speaker 500, device information including the type of external speaker 500, confirm whether the same audio is preset to be output through the speaker 185 and the external speaker 500 when a second external speaker 500-2 is additionally communication-connected in a state in which a first external speaker 500-1 is communication-connected, set the audio mode to a first audio mode when the same audio is preset to be output through the speaker 185 and the external speaker 500, set the audio mode to a second audio mode when different audio are preset to be output through the speaker 185 and the external speaker 500, and neither the type of first external speaker 500-1 nor the type of second external speaker 500-2 are the predetermined type, and set the audio mode to a third audio mode when different audio are preset to be output through the speaker 185 and the external speaker 500, and at least one of the type of first external speaker 500-1 and the type of second external speaker 500-2 is the predetermined type.

In addition, according to one aspect of the present disclosure, the controller 170 can transmit the second command to the first external speaker 500-1 and the second external speaker 500-2 based on the setting of any one of the first audio mode and the second audio mode, and transmit the first command to at least one of the first external speaker 500-1 and the second external speaker 500-2 based on the setting of the third audio mode.

In addition, according to one aspect of the present disclosure, the controller 170 can acquire information on buffer sizes from the first external speaker 500-1 and the second external speaker 500-2 when the first external speaker 500-1 and the second external speaker 500-2 are different devices, and determine a setting value for a delay of the audio output of the external speaker 500 based on the acquired information on the buffer sizes, and as the buffer size becomes larger, the set value for the delay of the audio output becomes larger.

In addition, according to one aspect of the present disclosure, the display device 100 can further include a user input interface 150, and the controller 170 can output a message that inquires whether to change the audio mode to the first audio mode or the second audio mode through the display 180 when different audio are preset to be output through the speaker 185 and the external speaker 500, and both the type of first external speaker 500-1 nor the type of second external speaker 500-2 are the predetermined type, and set the audio mode according to the user input received through the user input interface 150.

In addition, according to one aspect of the present disclosure, the first command can include a command for requesting transmission of a first setting value related to the predetermined function, preset in the external speaker 500, and the controller 170 can determine a second setting value related to the predetermined function preset in the display device 200 in response to the first setting value received from the first external speaker 500-1, and process the first audio signal based on the second setting value.

In addition, according to one aspect of the present disclosure, the controller 170 can transmit, to the second external speaker 500-2, the first setting value received from the first external speaker 500-1.

In addition, according to one aspect of the present disclosure, the controller 170 can output, based on receiving information on remaining electric energy of a battery from the external speaker 500, an indicator the remaining electric energy through the display 180, and output a screen including a notification corresponding to battery shortage of the external speaker 500 through the display 180 when the remaining electric energy is less than a reference value.

In addition, according to one aspect of the present disclosure, the display device 100 can further include a user input interface 150 receiving a user input, and the controller 170 can transmit, based on receiving a user input corresponding to setting of a low-power mode of reducing the use of power of the external speaker 500, a command corresponding to the low-power mode to the external speaker 500, and the command corresponding to the low-power mode can include a command for reducing a volume of the external speaker 500 and a command for turning off the power of the external speaker 500.

In addition, according to one aspect of the present disclosure, the controller 170 can receive information from the external speaker 500 through a vendor specific command of audio/video remote control profile (AVRCP), and transmit a command to the external speaker through the vendor specific command.

A system 10 according to one aspect of the present disclosure can include: a display device 100; and an external speaker 500, and the display device 100 can transmit a command for an output of an audio to the external speaker 500 based on a setting of an audio mode of outputting audio through a speaker 185 of the display device 100, and the external speaker 500, transmit a first audio signal to the external speaker 500 based on the command transmitted to the external speaker being a first command, and transmit a second audio signal generated by processing the first audio signal to the external speaker 500 based on the command transmitted to the external speaker 500 being a second command, and the external speaker 500 can output an audio corresponding to a third audio signal generated by processing the first audio signal based on reception of the first command, and output an audio corresponding to the second audio signal based on reception of the second command.

It is to be understood that the accompanying drawings are just used for easily understanding the embodiments disclosed in the present disclosure and a technical spirit disclosed in the present disclosure is not limited by the accompanying drawings and all changes, equivalents, or substitutes included in the spirit and the technical scope of the present disclosure are included.

Meanwhile, an operating method of the present disclosure can be implemented as a processor readable code in a processor readable recording medium. The processor readable recording medium includes all kinds of recording devices storing data which can be deciphered by a processor. Examples of the processor readable recording medium include a ROM, a RAM, a CD-ROM, a magnetic tape, a floppy disk, an optical data storage device, and the like and further include a device implemented as a type of a carrier wave such as transmission through the Internet. Further, the processor readable recording media can be stored and executed as codes which can be distributed in the computer system connected through a network and read by the processor in a distribution method.

Further, while the embodiments of the present disclosure have been illustrated and described above, the present disclosure is not limited to the aforementioned specific embodiments, various modifications can be made by a person with ordinary skill in the technical field to which the present disclosure pertains without departing from the subject matters of the present disclosure that are claimed in the claims, and these modifications should not be appreciated individually from the technical spirit or prospect of the present disclosure.

## Claims

1. A display device (100) comprising:
a display (180);
an internal speaker (185);
a wireless communication interface (173) communicating with at least one external speaker (500); and
a controller (170) configured to:
receive a first audio signal to be output through the internal speaker (185) and the at least one external speaker (500),
display a graphic user interface including a surround sound mode option and a non-surround sound mode option,
transmit a command to the at least one external speaker (500) requesting audio output capabilities of the at least one external speaker (500),
activate the surround sound mode option when the audio capabilities indicate the at least one external speaker (500) supports surround sound, and
deactivate the surround sound mode when the audio capabilities indicate the at least one external speaker (500) does not support surround sound.

2. The display device (100) of claim 1, wherein the controller (170) is further configured to:
in response to selection of the non-surround sound mode option, set an audio mode to a first audio mode for outputting the first audio signal simultaneously on the internal speaker (185) and the at least one external speaker (500).

3. The display device (100) of claim 1 or 2, wherein the controller (170) is further configured to:
in response to selection of the surround sound mode option,
output a main audio of the first audio signal on the internal speaker (185) and a sub audio of the first audio signal on the at least one external speaker (500), or
output the main audio of the first audio signal on the at least one external speaker (500) and the sub audio of the first audio signal on the internal speaker (185).

4. The display device (100) of any one of claims 1 to 3, wherein in the surround sound mode and/or in response to selection of the surround sound mode option, the controller (170) is further configured to:
process the first audio signal into a second audio output signal based on audio settings preset in the display device (100), and
output a first portion of the second audio signal on the internal speaker (185) and a second portion of the second audio signal on the at least one external speaker (500).

5. The display device (100) of any one of claims 1 to 3, wherein in the surround sound mode and/or in response to selection of the surround sound mode option, the controller (170) is further configured to:
process the first audio signal into a second audio signal based on audio settings preset in the display device (100),
output the second audio signal on the internal speaker (185),
process the second audio signal into a third audio signal compensated based on audio settings of the at least one external speaker (500), and
output the third audio signal to the at least one external speaker (500).

6. The display device (100) of any one of claims 1 to 3, wherein in the surround sound mode and/or in response to selection of the surround sound mode option, the controller (170) is further configured to:
process the first audio signal into a second audio signal based on audio settings preset in the display device (100),
output a first portion of the second audio signal on the internal speaker (185),
process a second portion of the second audio signal into a third audio signal compensated based on audio settings of the at least one external speaker (500), and
output the third audio signal to the at least one external speaker (500).

7. The display device (100) of any one of claims 1 to 3, wherein the controller (170) is further configured to:
send a command to the least one external speaker (500) to turn off the equalizer settings of the at least one external speaker (500),
process the first audio signal into a second audio output signal based on audio settings preset in the display device (100), and
output a first portion of the second audio signal on the internal speaker (185) and a second portion of the second audio signal on the at least one external speaker (500).

8. The display device (100) of any one of claims 1 to 3, wherein the controller (170) is further configured to:
send a command to the at least one external speaker (500) to turn off the equalizer settings of the at least one external speaker (500),
determine the at least one external speaker (500) does not have a capability to turn off the equalizer setting,
process the first audio signal into a second audio signal based on audio settings preset in the display device (100),
output the second audio signal on the internal speaker (185),
process the second audio signal into a third audio signal compensated based on audio settings of the at least one external speaker (500), and
output the third audio signal to the at least one external speaker (500).

9. A non-transitory computer readable medium storing instructions that when executed by a processor, cause the processor to execute the following:
receiving a first audio signal to be output through an internal speaker (185) and at least one external speaker (500);
displaying, on a display, a graphic user interface including a surround sound mode option and a non-surround sound mode option;
transmitting a command to the at least one external speaker (500) requesting audio output capabilities of the at least one external speaker (500);
activating the surround sound mode option when the audio capabilities indicate the at least one external speaker (500) supports surround sound; and
deactivating the surround sound mode when the audio capabilities indicate the at least one external speaker (500) does not support surround sound.

10. The non-transitory computer readable medium of claim 9, wherein the instructions, when executed by the processor, cause the processor to further execute the following:
in response to selection of the surround sound mode option,
outputting a main audio of the first audio signal on the internal speaker (185) and a sub audio of the first audio signal on the at least one external speaker (500); or
outputting the main audio of the first audio signal on the at least one external speaker (500) and the sub audio of the first audio signal on the internal speaker (185).

11. The non-transitory computer readable medium of claim 9 or 10, wherein the instructions, when executed by the processor, cause the processor to further execute the following:
processing the first audio signal into a second audio output signal based on audio settings preset in the display device (100); and
outputting a first portion of the second audio signal on the internal speaker (185) and a second portion of the second audio signal on the at least one external speaker (500).

12. The non-transitory computer readable medium of claim 9 or 10, wherein the instructions, when executed by the processor, cause the processor to further execute the following:
processing the first audio signal into a second audio signal based on audio settings preset in the display device (100);
outputting the second audio signal on the internal speaker (185);
processing the second audio signal into a third audio signal compensated based on audio settings of the at least one external speaker (500); and
outputting the third audio signal to the at least one external speaker (500).

13. The non-transitory computer readable medium of claim 9 or 10, wherein the instructions, when executed by the processor, cause the processor to further execute the following:
processing the first audio signal into a second audio signal based on audio settings preset in the display device (100);
outputting a first portion of the second audio signal on the internal speaker (185);
processing a second portion of the second audio signal into a third audio signal compensated based on audio settings of the at least one external speaker (500); and
outputting the third audio signal to the at least one external speaker (500).

14. The non-transitory computer readable medium of claim 9 or 10, wherein the instructions, when executed by the processor, cause the processor to further execute the following:
sending a command to the least one external speaker (500) to turn off the equalizer settings of the at least one external speaker (500);
processing the first audio signal into a second audio output signal based on audio settings preset in the display device (100); and
outputting a first portion of the second audio signal on the internal speaker (185) and a second portion of the second audio signal on the at least one external speaker (500).

15. The non-transitory computer readable medium of claim 9 or 10, wherein the instructions, when executed by the processor, cause the processor to further execute the following:
sending a command to the at least one external speaker (500) to turn off the equalizer settings of the at least one external speaker (500);
determining the at least one external speaker (500) does not have a capability to turn off the equalizer setting;
processing the first audio signal into a second audio signal based on audio settings preset in the display device (100);
outputting the second audio signal on the internal speaker (185);
processing the second audio signal into a third audio signal compensated based on audio settings of the at least one external speaker (500); and
outputting the third audio signal to the at least one external speaker (500).
